# EUROPÄISCHE PATENTSCHRIFT

(11) **EP 1 963 144 B1**
(45) Veröffentlichungstag und Bekanntmachung des Hinweises auf die Patenterteilung: **29.04.2009**
(21) Anmeldenummer: 06818583.4
(22) Anmeldetag: 16.11.2006
(51) Int. Cl.: B60R 21/207, B60R 21/233, B60N 2/44, B60N 2/427

(54) **SICHERHEITSEINRICHTUNG**
SAFETY DEVICE
DISPOSITIF DE SÉCURITÉ

(30) Priorität: 13.12.2005 DE 102005059997
(43) Veröffentlichungstag der Anmeldung: 03.09.2008
(73) Patentinhaber: AUTOLIV DEVELOPMENT AB, 447 83 Vargarda (SE)
(72) Erfinder: NARIN, Muhammed Ali, 81539 München (DE); ZAURITZ, Ralf, 83607 Holzkirchen (DE)
(74) Vertreter: Stornebel, Kai
(86) Internationale Anmeldenummer: PCT/EP2006/010995
(87) Internationale Veröffentlichungsnummer: WO 2007/068321

(56) Entgegenhaltungen:
- EP-A2- 1 077 154
- DE-A1- 19 735 915
- DE-U1- 20 316 865
- DE-U1- 29 504 287

## Beschreibung

Die Erfindung betrifft eine Sicherheitseinrichtung in einem Kraftfahrzeugsitz mit einem Airbag und einem Gasgenerator, der bei Vorliegen von Sensordaten über einen Unfall oder einen bevorstehenden Unfall aktiviert wird, den Airbag mit Gas befüllt und entfaltet.

Fahrzeuge der Oberklasse werden zunehmend mit Komfortfunktionen ausgestattet. Ein neues Ausstattungsmerkmal ist die Möglichkeit, in den Sitzwangen kleine Luftkissen in Abhängigkeit von .der Fahrsituation aufzublasen. Somit ist es beispielsweise während der Kurvenfahrt möglich, diejenige Sitzlehnenwange, die dem Kurvenaußenradius zugeordnet ist, bei entsprechenden Kurvenfahrten aufzublasen, um eine bessere Anbindung des Sitznutzers an den Sitz bereitzustellen. Darüber hinaus können die Luftkissen zur Erhöhung des Sitzkomforts und zur Anpassung der Sitzkontur an den Sitznutzer ausgebildet sein.

Aus dem Dokument EP 1 077 154 A2 ist ein Kraftfahrzeugsitz bekannt der eine Sicherheitseinrichtung entsprechend der Präambel des Anspruchs 1 zeigt. Hierbei liegt der Gedanke zugrunde die Verformungsstabilität des Sitzpolsters bei einem Unfall schneller erhöhen zu können, als bei einer Anpassung der gewünschten Nachgiebigkeit im Normalbetrieb.

Darüber hinaus sind in Fahrzeugsitzen Seitenairbags integriert, die bei einem Seitenaufprall oder bei einem drohenden Seitenaufprall aktiviert werden, um sich zwischen einem Sitznutzer und einer Fahrzeugstruktur zu erstrecken.
Aus der EP 1 140 572 B1 ist ein Kraftfahrzeugsitz mit einem gepolsterten Sitzteil bekannt, dessen Sitzfläche mit Seitenwangen ausgestattet ist. Eine gepolsterte Rückenlehrie weist ebenfalls Seitenwangen auf. In Bereichen einer Polsterung des Fahrzeugsitzes sind Hohlräume vorgesehen, die mit einer aktivierbaren Füllvorrichtung in Verbindung stehen. Innerhalb der Seitenwangen sind aufblasbare Luftsäcke angeordnet, die im aufgeblasenen Zustand in der Seitenwange eingeschlossen bleiben. Unterhalb oder innerhalb des Sitzes ist ein Gasgenerator angeordnet, der mit dem jeweiligen Luftsack verbunden ist.

Dabei wird der Gassack innerhalb des Bezugsstoffes bei einem Unfall aufgeblasen und schützt den Sitznutzer vor Verletzungen durch intrudierende Gegenstände. Dem liegt der Gedanke zugrunde, dass die Lage- und Verformungsstabilität eines zum Abbremsen und Festhalten des Fahrzeuginsassen sowie zum Schutz vor intrudierenden Teilen verwendeten Luftpolsters dadurch verbessert wird, dass anstelle eines sich frei entfaltenden Airbags eine oder beide Sitzwangen prall aufgeblasen werden, so dass sich der Überstand über den Mittelteil des Sitzpolsters oder der Rückenlehne vergrößert. Durch das innerhalb der Seitenwangen erzeugte, verhältnismäßig lagestabile Luftkissen kann ein auf dem Sitz sitzender Fahrzeuginsasse stabilisiert und geschützt werden. Durch diese bei einem Unfall zu aktivierende Sicherheitseinrichtung kann eine einmalige Stabilisierung des Sitznutzers gewährleistet werden. Der in den Sitzwangen vorhandene Bauraum ist jedoch dann für Komfortluftkissen belegt.

Aufgabe der vorliegenden Erfindung ist es, eine Sicherheitseinrichtung in einem Kraftfahrzeug bereitzustellen, die auch die Möglichkeit bietet, den Fahrzeugsitz während des Normalbetriebes des Fahrzeuges an die Bedürfnisse des Sitznutzers anzupassen.

Erfindungsgemäß wird eine solche Aufgabe durch eine Sicherheitseinrichtung mit den Merkmalen des Anspruchs 1 gelöst. Vorteilhafte Ausgestaltungen und Weiterbildungen der Erfindung werden in den Unteransprüchen beschrieben.

Die erfindungsgemäße Sicherheitseinrichtung in einem Kraftfahrzeug mit einem Airbag und einen Gasgenerator, der bei Vorliegen von Sensoren über einen Unfall oder einen bevorstehenden Unfall aktiviert wird, den Airbag mit Gas befüllt und entfaltet, ist dadurch gekennzeichnet, dass der Airbag zusätzlich mit einem regulierbaren, ein Volumen des Airbags wiederholt reversibel mit Gas befüllbaren Aktivator gekoppelt ist. Dabei ist es vorgesehen, dass eine Airbagkammer mit einem relativ kleinen Volumen für die Komfortfunktionen in der jeweiligen Sitzwange ungefaltet eingebaut wird. Diese Airbagkammer wird für die jeweils gewünschte Komfortfunktion über den Aktivator wiederholt und reversibel mit Gas befüllt bzw. entleert. Zusätzlich ist der Airbag unmittelbar oder über ein Gasleitsystem mit dem Gasgenerator verbunden, der im Falle eines Unfalles den Airbag mit einer entsprechend großen Gasmenge befüllt, um eine Rückhalte- oder Schutzfunktion auszuüben. Alternativ zu einer Anordnung in einer Sitzlehnenwange oder in einer Sitzflächenwange ist es vorgesehen, dass der Airbag in der Sitzrampe im Bereich einer Knieauflage des Sitzpolsters angeordnet ist, um die Oberschenkelauflage variabel einzustellen und gleichzeitig den sogenannten Submarining-Effekt im Falle eines Unfalles zu unterbinden.

Eine Weiterbildung der Erfindung sieht vor, dass der Aktivator als eine elektrische Pumpe ausgebildet ist, die sowohl Befüllen als auch Entlüften kann. Alternativ kann zum Entlüften ein Stellventil vorgesehen sein, das zum Reduzieren des Volumens des Airbags geöffnet wird.

Der Airbag bildet zwei Kammern aus, die unterschiedliche Volumina aufweisen. Die beiden Kammern können voneinander durch eine Reißnaht, eine Verklebung oder eine Faltung und Fixierung voneinander getrennt sein. Die zweite oder weitere Kammer kann durch verschiedene konstruktive Merkmale von dem Bereich des Airbags getrennt werden, der für die Komfortfunktion zuständig ist. Weiterhin kann die zweite Kammer oder das zusätzliche Volumen, das nur im Falle eines Unfalles durch den Gasgenerator befüllt wird, auf den reversibel befüllbaren Airbag für die Komfortfunktion, aufgerollt oder aufgefaltet werden.

Alternativ dazu ist es möglich, dass die mit dem Aktivator gekoppelte Kammer in der größeren Kammer des Airbags angeordnet ist und eine Kammer innerhalb der Kammer ausbildet. Die Kammer für die Komfortfunktion kann dann mit einer Reißnaht versehen sein, wenn sie ebenfalls über den Gasgenerator oder ein gemeinsames Gasleistsystem mit einem. Gas befüllt wird und das größere Kammervolumen strömungstechnisch mit dem Gasgenerator verbinden.

Zur Realisierung der Sicherheitsfunktion als Seitenairbag ist es möglich, dass in dem Sitz eine Sollreißnaht zur leichteren Entfaltung des Airbags bei einem Unfall und bei einer Befüllung durch den Gasgenerator ausgebildet ist.

Der Gasgenerator ist dabei so ausgebildet, dass er einen höheren Airbaginnendruck als der Aktivator bzw. als die Pumpe bereitstellt. Der Gasgenerator und der Aktivator können über ein gemeinsames Gasleitsystem mit dem Airbag gekoppelt sein. Neben einer gemeinsamen Gasführung durch die reversibel befüllbare Kammer ist es vorgesehen, dass der Gasgenerator strömungstechnisch getrennt mit einer weiteren Kammer verbunden ist, die größer als die mit dem Aktivator verbundene Kammer ist, so dass unterschiedliche Gasführungswege verwirklicht werden können.

Nachfolgend werden Ausführungsbeispiele der Erfindung anhand der beigefügten Figuren näher.erläutert. Es zeigen:
- Figur 1 -: eine schematische Darstellung eines in einer Sitzfläche angeordneten Airbags;
- Figur 2-: eine schematische Darstellung eines Seitenairbags;
- Figur 3 -: eine schematische .Darstellung der Sicherheitseinrichtung im Normalbetrieb;
- Figur 4 -: eine schematische Darstellung der Sicherheitseinrichtung bei einem Unfall; sowie
- Figur 5 -: eine nicht beanspruchte Sicherheitseinrichtung in eingebautem Zustand in der Sitzrampe.

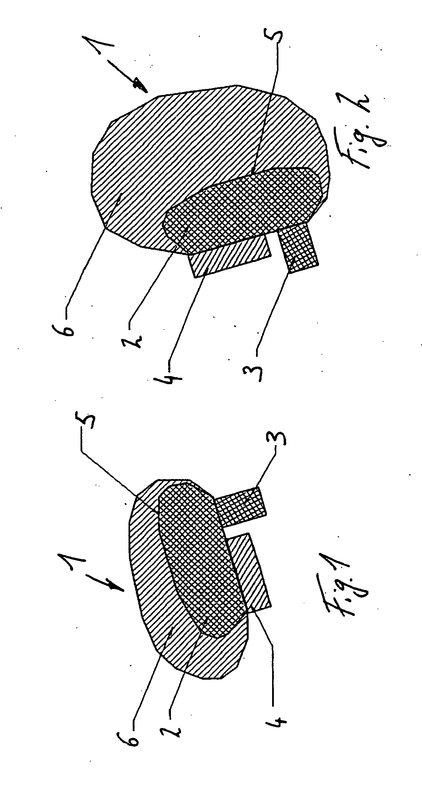

Figur 1 zeigt einen Airbag 1 mit einer ersten Kammer 2, die über einen Aktivator 3, der als elektrische Pumpe ausgebildet ist, mit einem Gas, insbesondere Luft, befüllt werden kann. Zwischen der Pumpe 3 und der ersten Kammer 2, die auch als Komfortkammer bezeichnet werden kann, ist eine unmittelbare strömungstechnische Verbindung vorhanden. Die Komfortkammer 3 wird für die Komfortfunktionen mit der elektrischen Pumpe 3 befüllt oder entleert. Alternativ zu einer Entleerung über die Pumpe 3 kann dies auch durch ein Ventil geschehen, das geöffnet wird, um Luft auf der Kammer 2 abzulassen. Darüber hinaus ist in der dargestellten Ausführungsform die Kammer 2 direkt mit einem Gasgenerator 4 verbunden, der bei Vorliegen entsprechender Sensordaten, die einen Unfall oder einen bevorstehenden Unfall anzeigen, aktiviert wird. Nach Aktivierung des Gasgenerators 4 wird heißes Gas in die erste oder Komfortkammer 2 geleitet und erzeugt dort einen Innendruck, der eine Reißnaht 5, die in dem Kammergewebe ausgebildet ist, zerreißt. Dadurch wird eine strömungstechnische Verbindung zu einer zweiten Kammer 6 oder Rückhaltekammer hergestellt, die durch die Gase des Gasgenerators 4 befüllt wird. Die Rückhaltekammer 6 ist größer als die Komfortkammer 2 und kann durch verschiedene konstruktive Merkmale von der Komfortkammer 2 getrennt sein. Neben der Reißnaht 5 kann eine Verklebung, eine entsprechende Faltung und Fixierung des umgefalteten Gewebes der Rückhaltekammer 6 und Aufhebung der Fixierung bei Überschreiten eines Kammerinnendruckes realisiert werden. Alternativ dazu kann die Rückhaltekammer 6 auch separat ausgebildet und getrennt von der Komfortkammer 2 mit dem Gasgenerator 4 in Verbindung stehen. Dabei ist es vorgesehen, dass die Komfortkammer 2 als eine in der Rückhaltekammer 6 angeordnete, separate Kammer 2 ausgebildet ist. Die Rückhaltekammer 6 ist dabei als eine Umhüllung für die Komfortkammer 2 ausgebildet und wird bei einem Aufblasen und Ablassen von Luft aus der Komfortkammer 2 entsprechend verlagert. Die aufgrund des angestrebten größeren Volumens der Rückhaltekammer 6 notwendige größere Stofffläche wird durch eine mehrfache Legung oder Auffaltung auf die Komfortkammer 2 platzsparend untergebracht. Alternativ dazu kann der Airbag 1 auch als ein großvolumiger Airbag ausgebildet sein, dessen kleines Volumen zur Ausbildung der Komfortkammer 4 durch eine Trennnaht abgetrennt wird.

Das Prinzip der mehreren Kammern und der sowohl reversibel als auch irreversibel durchzuführenden Befüllung der jeweiligen Kammer kann für unterschiedliche Zonen an einem Sitz verwendet werden. Mögliche Einbaupositionen sind dabei die Sitzlehnenwange, die Sitzrampe oder eine Sitzflächenwange. Im Falle der Rückhaltefunktion entsteht, eine Öffnung des Sitzes im Bereich des Airbags 1, um ein möglichst großes Volumen des Airbags 1 zu ermöglichen. Dies wird mit einer Reißnaht im Sitz erreicht, so dass sich der maximal entfaltete Airbag 1 unmittelbar an den Sitznutzer anlegen kann.

Während in der Figur 1 eine Anordnung als ein in der Sitzflächenwange angeordneter Airbag 1 gezeigt ist, ist in der Figur 2 ein in der Sitzlehnenwange angeordneter Airbag 1 dargestellt.

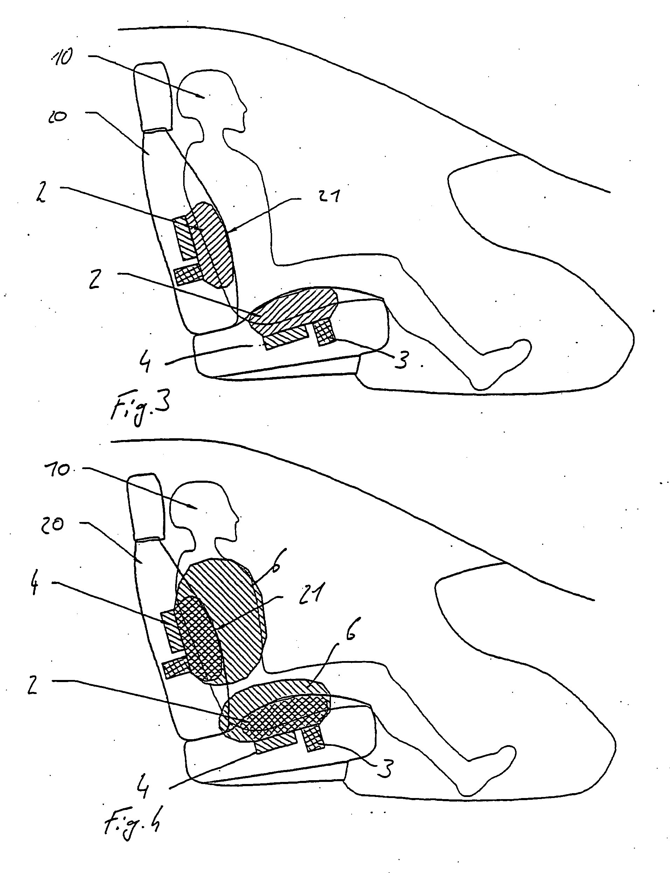

Eine schematische Darstellung der Sicherheitseinrichtungen im Normalbetrieb ist in der Figur 3 dargestellt, bei der in den Sitzseitenwangen die jeweiligen Airbags 1 angeordnet sind. Durch die jeweiligen Aktivatoren 3 oder Pumpen können die Polster der Sitzlehnenwange unterschiedlich straff in Richtung auf den Fahrzeuginsassen 10 vorgespannt werden. Dadurch wird eine bessere Kopplung des Fahrzeuginsassen 10 an den Fahrzeugsitz bewirkt. Innerhalb der Sitzlehne 20 ist an der Vorderseite eine Reißnaht 21 ausgebildet, durch die sich bei einem Unfall der Airbag in Fahrtrichtung erstrecken kann. Die in der Figur 3 dargestellte Komfortfunktion ermöglicht ein Befüllen der Komfortkammer 2, beispielsweise in Abhängigkeit von den durchfahrenen Kurvengeschwindigkeiten oder aufgrund individueller Einstellwünsche.

Bei Vorhandensein eines Pre-crash Sensors kann die reversible Aufblasfunktion auch als vorbereitende Maßnahme für einen Unfall genutzt werden. Durch die Kopplung des Insassen in den Sitz wird er in eine ideale Position gebracht, so dass bei einem tatsächlichen Unfall die Airbags eine optimale Schutzfunktion ausüben können. Sollte es doch zu keinem Unfall kommen, wird die Komfortkammer 2 wieder entleert bzw. auf die dem Komfort dienende Position zurückgestellt. Insofern wird bei Aktivierung des Pre-crash Sensors die Komfortkammer vollständig aufgeblasen.

In der Figur 4 ist die Sicherheitseinrichtung in einem aktivierten Zustand gezeigt, bei der die Gasgeneratoren 4 aktiviert wurden und die Rückhaltekammern 6 mit Gas befüllt wurden. Diese Rückhaltekammern 6 können Teil der Komfortkammern 2 oder separat ausgebildet sein. Während im Komfortmodus die elektrischen Pumpen 3 von einer nicht dargestellten Elektronikeinheit angesteuert werden, z. B. in Abhängigkeit von der Fahrsituation, den Einstellungen vom Fahrer oder dergleichen, wird der Airbag 1 gegebenenfalls durch die Komfortkammer 2 mit Gas aus den Gasgeneratoren 4 befüllt. Während in der Komfortfunktion die Sitzintegrität unbeeinträchtigt ist, also die Sitzpolster nicht zerreißen, baut sich durch die .Befüllung über die Gasgeneratoren 4. entweder in einer separaten Kammer oder in der Komfortkammer 2 ein deutlich höherer Innendruck als durch die Pumpen 3 auf. Dadurch wird die Trennung der Komfortkammer 2 von der Rückhaltekammer 6 aufgehoben und das große Volumen der Rückhaltekammer 6 für die Rückhaltefunktion befüllt. Durch das große Volumen wird eine Öffnung des Sitzes herbeigeführt, um die Rückhaltekammer 6 außerhalb der Sitze für den Insassen 10 zu positionieren. Die Rückhaltekammern 6 legen sich dabei neben den Fahrzeuginsassen 10.

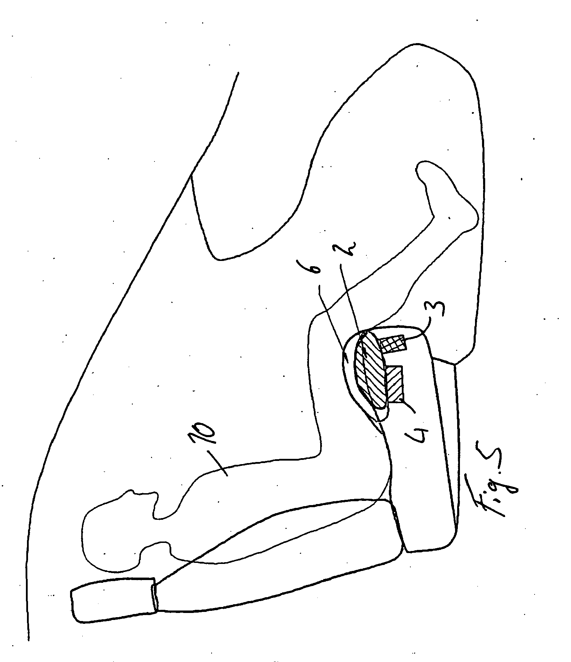

Eine nicht beanspruchte Anordnung ohne Austreten aus den Sitzpolstern ist in der Figur 5 dargestellt, bei der die Sicherheitseinrichtung in der Sitzrampe angeordnet ist. Während für die Komfortfunktion lediglich die Komfortkammer 2 durch die Pumpe 3 befüllt oder entleert wird, um eine Anpassung der Sitzrampenkontur an die Komfortwünsche des Insassen 10 bezüglich der Oberschenkelauflage zu realisieren, wird durch die Aktivierung des Gasgenerators 4. das Rückhaltevolumen 6 befüllt, um eine Verformung der Sitzfläche dahingehend zu erreichen, dass eine steile und steife Sitzrampe bereitgestellt wird. Dadurch wird der Effekt vermieden, dass der Fahrzeuginsasse 10 unter einem Beckengurt hindurchrutscht. Ein solcher Effekt wird als Submarining bezeichnet.

Nach der Befüllung der Rückhaltekammern 6 arbeitet das Sicherheitssystem wie ein konventioneller Airbag. Über eine Veritilationsöffnung kann eine benötigte Energieabsorption bereitgestellt werden.

Durch die Sicherheitseinrichtung können Kosten, Bauraum und Gewicht im Vergleich zu getrennten Systemen eingespart werden. Darüber hinaus ist ein geringerer Aufwand bezüglich der Steuerung und Verlegung von Versorgungseinrichtungen realisierbar, so dass die Einsparungen bezüglich Kosten, Bauraum und Gewicht bei Beibehaltung der Funktion stattfinden können. Ja nach detektiertem Unfall können einzelne oder sämtliche Sicherheitseinrichtungen innerhalb des Fahrzeugsitzes aktiviert werden.

## Patentansprüche

1. Sicherheitseinrichtung in einem Kraftfahrzeugsitz mit einem Airbag (1) und einem Gasgenerator (4), der bei Vorliegen von Sensordaten über einen Unfall oder einen bevorstehenden Unfall aktiviert wird und den Airbag (1) mit Gas befüllt, wobei der Airbag (1) zusätzlich mit einem regulierbaren, ein Volumen des Airbags (1) wiederholt reversibel mit Gas befüllbaren Aktivator (3) gekoppelt ist, **dadurch gekennzeichnet, dass** der Airbag (1) zwei Kammern (2, 6) ausbildet, die unterschiedliche Volumina aufweisen, wobei die Befüllung durch den Aktivator (3) die Sitzintegrität nicht beeinflusst, während durch die Befüllung durch den Gasgenerator der Sitz über eine Reißnaht geöffnet wird, so dass sich der Airbag (1) entfaltet und unmittelbar an den Insassen anlegen kann.

2. Sicherheitseinrichtung nach Anspruch 1, **dadurch gekennzeichnet, dass** der Aktivator (3) als elektrische Pumpe ausgebildet ist.

3. Sicherheitseinrichtung nach Anspruch 1 oder 2, **dadurch gekennzeichnet, dass** die Kammern (2. 6) voneinander durch eine Reißnaht (21), Verklebung oder eine Falzung und Fixierung des Airbags (1) getrennt sind.

4. Sicherheitseinrichtung nach einem der voranstehenden Ansprüche, **Dadurch gekennzeichnet, dass** eine Kammer (2) in der anderen Kammer (6) angeordnet ist.

5. Sicherheitseinrichtung nach einem der voranstehende Ansprüche, **dadurch gekennzeichnet, dass** der Airbag (1) in einer Sitzlehnenwange, Sitzrampe oder Sitzflächenwange angeordnet ist.

6. Sicherheitseinrichtung nach einem der voranstehenden Ansprüche, **dadurch gekennzeichnet, dass** in dem Sitz eine Sollreißnaht zur leichteren Entfaltung des Airbags (1) ausgebildet ist.

7. Sicherheitseinrichtung nach einem der voranstehenden Ansprüche, **dadurch gekennzeichnet, dass** der Gasgenerator (4) einen höheren Airbaginnendruck bereitstellt als der Aktivator (3).

8. Siclierheitseinrichtung nach einem der voranstehenden Ansprüche, **dadurch gekennzeichnet, dass** der Gasgenerator (4) und Aktivator (3) über ein gemeinsames Gasleitsystem mit dem Airbag (1) gekoppelt sind.

9. Sicherheitseinrichtung nach einem der Ansprüche 1 bis 7, **dadurch** gekenntzeichnet, dass der Aktivator (3) strömungstechnisch mit einer Kammer (2) verbunden ist, die kleiner als die Kammer (6) ist, mit der der Gasgenerator (4) verbunden ist und dass der Aktivator (3) und der Gasgenerator (4) strömungstechnisch getrennt mit den jeweiligen Kalmern (2, 6) verbunden sind.

## Claims

1. Safety device in a motor vehicle seat with an airbag (1) and a gas generator (4), which is activated in the event of sensor data about an accident or an imminent accident being present and fills the airbag (1) with gas, the airbag (1) additionally being coupled to an activator (3) which can be regulated and can fill a volume of the airbag (1) with gas repeatedly and reversibly, **characterised in that** the airbag (1) forms two chambers (2, 6), which have different volumes, the filling by the activator (3) not influencing the seat integrity, while, owing to the filling by the gas generator, the seat is opened by means of a tear seam, so the airbag (1) can deploy and rest directly on the occupant.

2. Safety device according to claim 1, **characterised in that** the activator (3) is configured as an electric pump.

3. Safety device according to claim 1 or 2, **characterised in that** the chambers (2, 6) are separated from one another by a tear seam (21), adhesion or a folding and fixing of the airbag (1).

4. Safety device according to any one of the preceding claims, **characterised in that** one chamber (2) is arranged in the other chamber (6).

5. Safety device according to any one of the preceding claims, **characterised in that** the airbag (1) is arranged in a backrest flank, seat ramp or seat surface flank.

6. Safety device according to any one of the preceding claims, **characterised in that** a desired tear seam for easier deployment of the airbag (1) is configured in the seat.

7. Safety device according to any one of the preceding claims, **characterised in that** the gas generator (4) provides a higher internal airbag pressure than the activator (3).

8. Safety device according to any one of the preceding claims, **characterised in that** the gas generator (4) and activator (3) are coupled by means of a common gas line system to the airbag (1).

9. Safety device according to any one of claims 1 to 7, **characterised in that** the activator (3) is connected in terms of flow to a chamber (2), which is smaller than the chamber (6), to which the gas generator (4) is connected and **in that** the activator (3) and the gas generator (4) are connected separately in terms of flow to the respective chambers (2, 6).

## Revendications

1. Dispositif de sécurité dans un siège de véhicule automobile, comprenant un coussin gonflable (1) et un générateur de gaz (4) qui est activé en présence de données de capteur au sujet d'un accident ou d'un accident imminent et qui remplit le coussin gonflable (1) avec du gaz, le coussin gonflable étant en outre couplé avec un activateur (3) réglable, pouvant remplir de façon réversible et répétée un volume du coussin gonflable (1) avec du gaz, **caractérisé en ce que** le coussin gonflable (1) forme deux chambres (2, 6) qui présentent des volumes différents, le remplissage par l'activateur (3) n'influant pas sur l'intégrité du siège, tandis que le siège est ouvert sur une couture déchirable par le remplissage par le générateur de gaz, de sorte que le coussin gonflable (1) se déploie et puisse directement se mettre en place sur l'occupant.

2. Dispositif de sécurité selon la revendication 1, **caractérisé en ce que** l'activateur (3) est formé en tant que pompe électrique.

3. Dispositif de sécurité selon la revendication 1 ou 2, **caractérisé en ce que** les chambres (2, 6) sont séparées l'une de l'autre par une couture de déchirement (21), un collage, ou une pliure et fixation du coussin gonflable (1).

4. Dispositif de sécurité selon l'une des revendications précédentes, **caractérisé en ce qu'**une chambre (2) est agencée dans l'autre chambre (6).

5. Dispositif de sécurité selon l'une des revendications précédentes, **caractérisé en ce que** le coussin gonflable (1) est agencé dans une joue de dossier du siège, une assise du siège ou une joue de la surface d'assise.

6. Dispositif de sécurité selon l'une des revendications précédentes, **caractérisé en ce qu'**une couture devant se déchirer est formée dans le siège pour faciliter le déploiement du coussin gonflable (1).

7. Dispositif de sécurité selon l'une des revendications précédentes, **caractérisé en ce que** le générateur de gaz (4) instaure à l'intérieur du coussin gonflable une pression plus élevée que l'activateur (3).

8. Dispositif de sécurité selon l'une des revendications précédentes, **caractérisé en ce que** le générateur de gaz (4) et l'activateur (3) sont couplés avec le coussin gonflable (1) via une tuyauterie de gaz commune.

9. Dispositif de sécurité selon l'une des revendications 1 à 7, **caractérisé en ce que** l'activateur (3) est en liaison d'écoulement avec une chambre (2) qui est plus petite que la chambre (6) et reliée au générateur de gaz (4), et l'activateur (3) et le générateur de gaz (4) sont en liaison d'écoulement séparée chacun avec sa chambre (2, 6).
